# EUROPÄISCHE PATENTSCHRIFT

(11) **EP 3 321 172 B1**
(45) Veröffentlichungstag und Bekanntmachung des Hinweises auf die Patenterteilung: **01.01.2020**
(21) Anmeldenummer: 17201586.9
(22) Anmeldetag: 14.11.2017
(51) Int. Cl.: B63H 23/24, B63H 21/17, B63H 21/21, B60L 8/00, B60L 50/15

(54) **ANTRIEB FÜR EIN BOOT UND VERFAHREN ZUM BETREIBEN EINES ANTRIEBS FÜR EIN BOOT**
DRIVE FOR A BOAT AND METHOD FOR OPERATING A DRIVE FOR A BOAT
ENTRAÎNEMENT POUR UN BATEAU ET PROCÉDÉ DESTINÉ AU FONCTIONNEMENT D'UN ENTRAÎNEMENT POUR UN BATEAU

(30) Priorität: 14.11.2016 DE 102016121800
(43) Veröffentlichungstag der Anmeldung: 16.05.2018
(73) Patentinhaber: Torqeedo GmbH, 82205 Gilching (DE)
(72) Erfinder: Biebach, Jens, 82327 Tutzing (DE)
(74) Vertreter: Nordmeyer, Philipp Werner

(56) Entgegenhaltungen:
- DE-A1- 2 943 270
- DE-B3-102008 038 896
- DE-U1-202009 015 026
- FR-A1- 3 017 597
- US-A- 3 238 911
- US-A1- 2010 009 578
- US-B2- 8 330 288

## Beschreibung

### Technisches Gebiet

Die vorliegende Erfindung betrifft einen Antrieb für ein Boot, insbesondere für ein Segelboot, sowie ein Verfahren zum Betreiben eines Antriebs für ein Boot.

### Technischer Hintergrund

Es ist bekannt, zum Bewegen von Booten, beispielsweise zum Manövrieren, Bootsantriebe mit Elektromotoren zu verwenden.

Zur Versorgung der Elektroantriebe mit Energie werden üblicherweise im Boot mitgeführte Batterien verwendet, die beispielsweise über ein mit einem Landanschluss versehenes Ladegerät aufgeladen werden können. Wenn kein Landanschluss verfügbar ist, beispielsweise weil das Boot sich in Bewegung befindet, können Generatoren mit Verbrennungsmotor auf dem Boot vorgesehen sein, um die Batterien zu laden, oder es sind Solarzellen oder Windgeneratoren bekannt, mittels welchen die Batterien geladen werden können.

Elektromotoren in Antrieben von Booten werden üblicher Weise im ersten Quadranten zum Bereitstellen eines Vorwärtsschubs und damit zum Vorwärtsfahren, und im dritten Quadranten zum Bereitstellen eines Rückwärtsschubs und damit zum Rückwärtsfahren oder zum Aufstoppen betrieben. Die jeweiligen Fahrbefehle bekommt der Elektromotor beziehungsweise dessen Steuervorrichtung dabei üblicher Weise über einen Ferngashebel von einem Bediener des Boots.

Dokument DE 20 2009 015026 U1 zeigt eine Vorrichtung zum Antrieb eines Wasserfahrzeugs mit einem Steuermodul in Form eines im vierten Quadranten betreibbaren Umrichters, um einen mit einem Propeller verbundenen Elektromotor als Generator zu betreiben.

Dokument US 8330288 B2 offenbart eine Vorrichtung, die um einen optimalen Arbeitspunkt des Elektromotors zu erreichen, ein Sollwert der Leistung in Abhängigkeit von der Bootsgeschwindigkeit fixiert.

### Darstellung der Erfindung

Ausgehend von dem bekannten Stand der Technik ist es eine Aufgabe der vorliegenden Erfindung, einen Antrieb für ein Boot, insbesondere ein Segelboot, bereitzustellen, der ein alternatives Vorgehen zum Laden der Batterien bereitstellt.

Die Aufgabe wird durch einen Antrieb sowie ein Verfahren gemäß den unabhängigen Patentansprüchen gelöst. Vorteilhafte Weiterbildungen ergeben sich aus den Unteransprüchen sowie der vorliegenden Beschreibung und den Figuren.

Entsprechend wird ein Antrieb für ein Boot, insbesondere für ein Segelboot, vorgeschlagen, umfassend einen Elektromotor, einen mit dem Elektromotor verbundenen Propeller und eine Steuervorrichtung. Die Steuervorrichtung ist dazu eingerichtet, den Elektromotor im vierten Quadranten derart zu betreiben, dass dieser eine über den Propeller an den Elektromotor übertragene Strömungsenergie von den Propeller umgebendem Wasser in elektrische Energie regeneriert.

Eine Regeneration von elektrischer Energie aus Strömungsenergie ist hierbei und im Folgenden eine zumindest teilweise Umwandlung der Strömungsenergie des Wassers in elektrische Energie. Damit wird es möglich, die Batterien an Bord des Bootes durch die Bewegung des Bootes durch das Wasser zu laden. Dies ist besonders bevorzugt bei Segelbooten umzusetzen, da hier der durch die Segel erzeugte Vortrieb zum Teil in elektrische Energie umgewandelt werden kann. Damit kann ein Segelboot während des Segelns elektrische Energie aus seiner Fahrt durch das Wasser umwandeln, mittels welcher die Bordbatterien wieder geladen werden können.

Ferner ist die Steuervorrichtung bevorzugt dazu eingerichtet, den Elektromotor im vierten Quadranten derart zu betreiben, dass ein Produkt aus einer Propeller-Steigung des Propellers und einer Drehzahl des Propellers geringer als eine relative Strömungsgeschwindigkeit zwischen dem Wasser und dem Antrieb ist. Auf diese Weise kann ein optimierter Betrieb erreicht werden und ein Überschuss an elektrischer Energie kann bereitgestellt werden, der dann zum Laden der Batterien verwendet werden kann.

Der Begriff "Quadrant" bezieht sich hierbei und im Folgenden auf die Quadranten eines kartesischen Koordinatensystems, wobei die Drehzahl des Elektromotors auf der Abszisse aufgetragen ist und das Drehmoment des Elektromotors auf der Ordinate. Die Drehzahl des Elektromotors geht bei Synchronmaschinen auch mit einer proportional induzierten Spannung einher. Das Drehmoment wird auch durch Länge und Richtung des Phasenstromzeigers charakterisiert, der dann Höhe und Richtung des Drehmoments beschreibt.

Bei einem Betrieb im ersten Quadranten (sogenannter Vorwärtslauf) sind das Drehmoment und die Drehrichtung beide positiv und damit parallel. Bei einem Betrieb im zweiten Quadranten (sogenanntes Rückwärtslaufbremsen) ist das Drehmoment positiv und die Drehrichtung negativ und damit antiparallel. Bei einem Betrieb im dritten Quadranten (sogenannter Rückwärtslauf) sind Drehmoment und Drehrichtung beide negativ und damit auch parallel. Bei einem Betrieb im vierten Quadranten (sogenannte Regeneration oder auch Vorwärtslaufbremsen) ist das Drehmoment negativ und die Drehrichtung positiv und damit antiparallel. Im Regenerations-Betrieb im vierten Quadranten ist also die Drehrichtung des Propellers positiv, während das Drehmoment des Propellers negativ ist.

Der Betrieb des Elektromotors im vierten Quadranten erfolgt dabei entsprechend derart, dass das Produkt der Drehzahl und der Propeller-Steigung, insbesondere dessen Betrag, geringer als die relative Strömungsgeschwindigkeit, insbesondere deren Betrag, ist. Bei dem Produkt der Drehzahl und der Propeller-Steigung kann es sich um den theoretischen Vortrieb des Propellers, der bei gleicher Drehzahl und Propeller-Steigung beim Betrieb im ersten Quadranten erzielt werden kann, handeln. Hierbei und im Folgenden wird das Verhältnis des Produkts der Drehzahl und der Propeller-Steigung zu der relativen Strömungsgeschwindigkeit auch als Verstärkungsfaktor bezeichnet. Insbesondere kann der Verstärkungsfaktor konstant und kleiner eins sein. Die Propeller-Steigung entspricht hierbei und im Folgenden der geometrischen Steigung des Propellers. Insbesondere kann die Propeller-Steigung der Strecke entsprechen, die der Propeller während einer Umdrehung in einem festen Material zurücklegen würde. Bei der Propeller-Steigung kann es sich um eine konstante oder eine gemittelte progressive Steigung des Propellers handeln.

Durch den Betrieb des Antriebs als Regenerator im vierten Quadranten ist es möglich, aus der Strömungsenergie des Wassers und/oder aus der Bewegungsenergie des Bootes elektrische Energie zum Betrieb des Antriebs umzuwandeln.

Alternativ oder zusätzlich ist es möglich, dass das Boot einen weiteren Antrieb enthält, der beispielsweise mittels Benzin oder Diesel betrieben wird. Bei der Kombination des Antriebs und des weiteren Antriebs kann es sich um einen Hybridantrieb handeln. Der elektrische Antrieb kann einen Energiespeicher, wie beispielsweise eine Batterie, aufweisen. Der Energiespeicher kann zur Speicherung der aus der Strömungsenergie regenerierten elektrischen Energie dienen.

Die Steuervorrichtung kann ferner dazu eingerichtet sein, den Elektromotor derart zu betreiben, dass der Verstärkungsfaktor konstant ist. Hierdurch ist es möglich, eine maximale Regenerationsleistung zu erreichen. Eine optimale Verstärkung, das heißt das optimale Verhältnis von Propeller-Steigung und Drehzahl zur relativen Geschwindigkeit, ergibt sich beispielsweise aus der Geometrie des Propellers, insbesondere einer Propellerform und einem Propellerdurchmesser. Bei gegebener Geometrie ist es möglich, die optimale Verstärkung theoretisch zu berechnen. Der theoretisch berechnete Wert für die optimale Verstärkung kann anschließend beispielsweise einer praktischen Verifizierung und Optimierung im Betrieb des Antriebs, beispielsweise unter Verwendung einer Regelung, unterzogen werden.

Gemäß einer bevorzugten Ausführungsform ist der Propeller als Faltpropeller ausgebildet. Ein Faltpropeller wird besonders bevorzugt bei einem Segelboot verwendet, um beim Segeln einen möglichst geringen Widerstand durch den Antrieb bereit zu stellen, aber beim Verwenden des Antriebs einen hohen Schub zu erreichen. Insbesondere kann es sich bei dem Propeller um einen Zwei-Blatt-Faltpropeller handeln.

Die Steuervorrichtung ist dazu eingerichtet, den Elektromotor vor dem Betrieb im vierten Quadranten zunächst im ersten Quadranten zu betreiben, also in einem Vorwärtslauf, um den Propeller auszuklappen. Der Propeller wird also zunächst auf eine vorgegebene Drehzahl mittels des Motors beschleunigt, um ein Ausklappen zu ermöglichen. Das Ausklappen des Faltpropellers findet auf Grundlage der Fliehkraft der Propellerblätter statt, die ab einer bestimmten Drehzahl entsprechend ausklappen. Der Betrieb im ersten Quadranten kann das Öffnen des Propellers unterstützen, da im motorischen Betrieb eine Kraftwirkung entsteht, die das Boot schiebt und damit auch den Faltpropeller aufdrückt. Dann wird der Betrieb des dann ausgeklappten Propellers wie oben beschrieben im vierten Quadranten durchgeführt.

Besonders bevorzugt wird dabei der Elektromotor konstant auf einer Drehzahl gehalten, die zum Einen einen möglichst effizienten Betrieb des Elektromotors im dritten Quadranten ermöglicht, gleichzeitig aber auch ein Wiedereinklappen des Propellers verhindert.

Ein Faltpropeller zeichnet sich dadurch aus, dass der Propeller, insbesondere dessen Blätter beziehungsweise Flügel, eingeklappt werden können. Dies kann im Fall eines Antriebs für Segelboote vorteilhaft sein, da der Strömungswiderstand des Propellers im Segelbetrieb verringert werden kann. Für die Verwendung des Antriebs kann der Propeller ausgeklappt werden. Hierbei ergibt sich die Herausforderung, dass der Propeller aufgrund der auftretenden Fliehkräfte normalerweise nur beim Betrieb im ersten Quadranten und gegebenenfalls im dritten Quadranten ausgeklappt ist, also bei einem aktiven Vorwärts- oder Rückwärtsschubbetrieb des Motors. Ein Andrehen des eingeklappten Propellers durch das anströmende Wasser ist im Normalbetrieb weder möglich noch erwünscht - vielmehr ist der Propeller so ausgebildet, dass er ohne Antrieb durch den Elektromotor zuverlässig einklappt, um einen möglichst kleinen Widerstand beim Segeln und damit bei ausgeschaltetem Motor zu erreichen. Es kann aber durchaus notwendig sein, das Zuklappen des Propellers durch das Festhalten des Propellerschafts beziehungsweise durch den Betrieb bei einer sehr kleinen Drehzahl zu unterstützen. Mit anderen Worten kann nicht nur das Aufklappen des Faltpropellers, sondern auch das Zuklappen des Faltpropellers durch eine entsprechende Ansteuerung des Elektromotors erreicht werden.

Um nun einen Betrieb im vierten Quadranten mit einem Faltpropeller während der Fahrt durch Wasser zu ermöglichen, kann der Elektromotor, insbesondere kurzzeitig, im ersten Quadranten betrieben werden. Hierdurch wird der Propeller ausgeklappt. Wenn die relative Strömungsgeschwindigkeit ausreichend hoch, insbesondere positiv, ist, kann auf einen Betrieb im vierten Quadranten umgeschaltet werden und die Drehung des Propellers wird durch das anströmende Wasser aufrecht erhalten, wobei die Drehzahl des Propellers durch die Steuereinheit gesteuert und kontrolliert wird. Die Drehrichtung des Propellers ändert sich durch das Umschalten des Betriebs vom ersten Quadranten in den vierten Quadranten nicht. Der Propeller bleibt dann weiterhin ausgeklappt, wobei nun Strömungsenergie in elektrische Energie umgewandelt wird.

Ferner ist es möglich, dass der Propeller dazu eingerichtet ist, für einen Betrieb im zweiten Quadranten zunächst im dritten Quadranten betrieben zu werden.

Besonders bevorzugt ist die Steuervorrichtung dazu vorgesehen, zumindest eine Mindestdrehzahl des Faltpropellers im Betrieb im vierten Quadranten bereit zu stellen, um ein Einklappen des Faltpropellers beim Betrieb im vierten Quadranten zu unterbinden.

Gemäß zumindest einer Ausführungsform des Antriebs umfasst die relative Strömungsgeschwindigkeit eine Bootsgeschwindigkeit und/oder eine absolute Strömungsgeschwindigkeit des Wassers. Die relative Strömungsgeschwindigkeit kann eine Differenz der Bootsgeschwindigkeit und der absoluten Strömungsgeschwindigkeit sein. Bevorzugt handelt es sich bei der relativen Strömungsgeschwindigkeit um eine Anströmgeschwindigkeit des Wassers in Bezug auf den Propeller. Bei der Bootsgeschwindigkeit kann es sich um eine Geschwindigkeit des Bootes relativ zum Grund handeln. Die absolute Strömungsgeschwindigkeit des Wassers kann eine Anströmgeschwindigkeit des Wassers im Bereich des Bootes relativ zum Grund gemessen sein. Insbesondere im Fall starker Strömungen kann die Geschwindigkeit des Bootes relativ zum Grund von einer Geschwindigkeit des Bootes durch das Wasser abweichen. Beispielsweise ist es möglich, dass der Betrieb im vierten Quadranten erfolgt, wenn das Boot vor Anker liegt. In diesem Fall ist die Bootsgeschwindigkeit vernachlässigbar klein und die relative Strömungsgeschwindigkeit kann die absolute Strömungsgeschwindigkeit sein. Ferner ist es möglich, dass sich das Boot während des Betriebs im vierten Quadranten durch das Wasser bewegt. Im Fall von annähernd strömungslosem Wasser, wie beispielsweise im Fall eines ruhigen Sees, kann es sich dann bei der relativen Strömungsgeschwindigkeit um die Bootsgeschwindigkeit über Grund handeln.

Gemäß zumindest einer Ausführungsform umfasst der Antrieb zumindest einen Sensor. Der zumindest eine Sensor ist zur Ermittlung der relativen Strömungsgeschwindigkeit eingerichtet. Bei dem zumindest einen Sensor kann es sich beispielsweise um ein Staudruckrohr, einen Strömungssensor und/oder weitere Geschwindigkeitssensoren handeln. Bevorzugt umfasst der Antrieb mehrere Sensoren. Es ist möglich, dass zumindest einer der Sensoren ein Sensor des Bootes ist, der mit der Steuervorrichtung verbunden ist.

Gemäß einer bevorzugten Ausführungsform beinhaltet der Sensor einen GPS-Sensor und/oder einen Strömungssensor. Beispielsweise kann hierbei ein GPS-Sensor und/oder ein Strömungssensor des Bootes verwendet werden. Mittels eines GPS-Sensors kann insbesondere die Bootsgeschwindigkeit des Boots, also die Geschwindigkeit im Bezug zum Grund, genau bestimmt werden. Bei geringen absoluten Strömungsgeschwindigkeiten des Wassers ergibt sich somit eine recht genaue Bestimmung der relativen Strömungsgeschwindigkeit.

Gemäß zumindest einer Ausführungsform des Antriebs ist die Steuervorrichtung dazu eingerichtet, die Drehzahl des Propellers in Abhängigkeit von der ermittelten relativen Strömungsgeschwindigkeit zu regeln. Hierbei kann die Steuervorrichtung mit dem Sensor insbesondere einen offenen Regelkreis (Englisch: open loop) bilden. Beispielsweise kann bei einer Erhöhung der relativen Strömungsgeschwindigkeit die Drehzahl des Propellers erhöht werden oder umgekehrt. Alternativ oder zusätzlich ist es möglich, dass die Regelung derart erfolgt, dass die Drehzahl des Propellers, insbesondere im Fall von konstanter relativer Strömungsgeschwindigkeit, konstant gehalten wird.

Gemäß zumindest einer Ausführungsform umfasst der Antrieb eine Regelvorrichtung und einen Leistungssensor zur Ermittlung der von dem Elektromotor abgegebenen Leistung. Die Regelvorrichtung bildet mit dem Leistungssensor einen geschlossenen Regelkreis zur Regelung der Drehzahl des Propellers. Bei dem geschlossenen Regelkreis (Englisch: closed loop) handelt es sich bevorzugt um eine Rückkopplungsschleife (Englisch: feedback loop). Mittels des Regelkreises kann dann die Drehzahl des Propellers in Abhängigkeit von der ermittelten Leistung des Elektromotors angepasst werden. Für die Drehzahlvorgabe kann also eine Leistungsregelung verantwortlich sein.

Bevorzugt ist die Regelvorrichtung dazu eingerichtet, die Drehzahl des Propellers mittels einer Maximal-Leistungspunkte-Suche (Englisch: Maximum Power Point Tracker, MPPT) zu regeln. Bei einem solchen Verfahren wird die abgegebene Leistung, bevorzugt kontinuierlich, mittels des Leistungssensors überwacht. In Abhängigkeit von der ermittelten Leistung des Elektromotors kann dann mittels der Regelvorrichtung die Drehzahl des Elektromotors angepasst werden. Die Drehzahl des Elektromotors wird bevorzugt mittels der Maximal-Leistungspunkt-Suche derart angepasst, dass die abgegebene Leistung und damit die Regeneration maximal ist.

Für die Einstellung eines optimalen Arbeitspunktes des Elektromotors des Antriebs kann bevorzugt ein offener Regelkreis mit einem geschlossenen Regelkreis kombiniert werden. So ist es möglich, zunächst eine Vorsteuerung mittels eines offenen Regelkreises für die grobe Einstellung des Arbeitspunktes zu realisieren. Die Feinoptimierung kann dann mittels eines geschlossenen Regelkreises erreicht werden. Bei dem optimalen Arbeitspunkt handelt es sich bevorzugt um eine Drehzahl des Elektromotors beziehungsweise des Propellers, bei der die Regeneration maximal ist. Als offener Regelkreis eignet sich beispielsweise die oben beschriebene Regelung basierend auf der relativen Strömungsgeschwindigkeit. Für den geschlossenen Regelkreis kann insbesondere die oben beschriebene Leistungsanpassung verwendet werden.

Durch eine Kombination eines offenen und eines geschlossenen Regelkreises ist es insbesondere möglich, die Vorteile beider Verfahren zu kombinieren. Ein Vorteil der Verwendung eines offenen Regelkreises basierend auf einer Messung der relativen Strömungsgeschwindigkeit besteht beispielsweise in der relativen Konstanz der Bootsgeschwindigkeit sowohl durch das Wasser als auch über Grund, sodass hydrodynamisch bedingte Schwankungen des Drehmoments des Propellers und/oder des Elektromotors, insbesondere aufgrund der absoluten Strömungsgeschwindigkeit des Wassers, gut kompensiert werden können. Mit dem geschlossenen Regelkreis kann eine präzise Optimierung der Drehzahl mittels einer Optimierung der abgegebenen Leistung erzielt werden. Durch die Kombination des offenen und des geschlossenen Regelkreises kann die Verstärkung des geschlossenen Regelkreises reduziert werden, so dass das System eine höhere Stabilität erlangt.

Gemäß zumindest einer Ausführungsform ist die Propeller-Steigung eine Funktion der relativen Strömungsgeschwindigkeit. Dies ist bei Propellern mit einer einstellbaren Steigung, die auch als Autopropeller bekannt sind, der Fall. Mit anderen Worten, die Propeller-Steigung verändert sich mit steigender und/oder fallender relativer Strömungsgeschwindigkeit. Die Steuervorrichtung ist dazu eingerichtet, die Drehzahl des Propellers in Abhängigkeit von der relativen Strömungsgeschwindigkeit und dieser Funktion zu regeln.

Bevorzugt erfolgt die Regelung mittels eines offenen Regelkreises, insbesondere des zuvor beschriebenen offenen Regelkreises. Der Antrieb kann, bevorzugt für den Fall des offenen Regelkreises, eine Speichereinheit enthalten, in der die Funktion gespeichert ist. Beispielsweise ist die Funktion der Propeller-Steigung als Nachschlagtabelle (Englisch: look-up table) in der Speichereinheit gespeichert. Alternativ oder zusätzlich kann die Regelung der Drehzahl im Fall einer solchen geschwindigkeitsabhängigen Propeller-Steigung auch mittels einer Maximal-Leistungspunkt-Suche erfolgen. In diesem Falle erfolgt die Anpassung der Verstärkung adaptiv an die sich mit der Drehzahl ändernde Propellersteigung als Funktion der Drehzahl. Auch die Nachführung der Verstärkung mit einer Maximal-Leistungspunktsuche kann durchgeführt werden.

Neben den Autopropellern sind auch Propeller mit von außen veränderbarer Steigung bekannt.

Bei den Propellern mit von außen veränderbarer Propeller-Steigung kann die Propellersteigung von der Steuervorrichtung so adaptiert werden, dass im Zusammenhang mit der ebenfalls adaptierten Propellergeschwindigkeit eine Optimierung bezüglich des Betriebs im vierten Quadranten durchgeführt werden kann und damit eine maximale Regenerationsleistung bei der jeweiligen relativen Strömungsgeschwindigkeit erreicht werden kann.

Durch Berücksichtigung der Funktion mittels der Steuervorrichtung ist es möglich, eine Änderung der Propellergeometrie mit der relativen Strömungsgeschwindigkeit zu kompensieren. Dies kann insbesondere für den Fall, in dem es sich bei dem Propeller um einen Faltpropeller handelt, vorteilhaft sein. Bei einem Faltpropeller ist es möglich, dass sich dieser mit zunehmender Geschwindigkeit des Bootes im Wasser, und damit mit zunehmender relativer Strömungsgeschwindigkeit, allmählich schließt. Dies kann zu einer Änderung der Propellergeometrie und damit des Verstärkungsfaktors führen. Für diesen Fall kann die Berücksichtigung eines geschwindigkeitsabhängigen Verstärkungsfaktors insbesondere unter Verwendung einer Nachschlagtabelle vorteilhaft sein.

Durch die vorgeschlagene Regelung ist es auch möglich, auf die sich verändernde Propellergeometrie bei steigender Regenerationsleistung und/oder steigender Strömungsgeschwindigkeit zu reagieren. Durch eine erhöhte Regenerationsleistung und/oder eine erhöhte Strömungsgeschwindigkeit klappt der Faltpropeller bei gleicher Drehzahl und damit gleicher auf die Propellerblätter öffnend wirkender Fliehkraft etwas ein, bis sich wieder ein Kräftegleichgewicht einstellt. Damit ändert sich die wirksame Propellergeometrie, was von der vorgeschlagenen Regelung beim Betrieb berücksichtigt wird.

In diesem Zusammenhang kann auch eine Vorrichtung zum Sperren der Propellerblätter in der ausgeklappten Position vorgesehen sein, die mechanisch ein Einklappen der Propellerblätter im Regenerationsbetrieb und insbesondere bei einer steigenden Regenerationsleistung oder einer steigenden Strömungsgeschwindigkeit verhindert. Die Vorrichtung zum Sperren der Propellerblätter in der ausgeklappten Position wird bevorzugt auch von der Steuervorrichtung angesteuert oder kann aufgrund eines vorgegebenen Betriebsmusters des Elektromotors an die Vorrichtung zum Sperren der Propellerblätter übergeben werden.

Es wird ferner ein Verfahren zum Betreiben eines Antriebs für ein Boot, insbesondere für ein Segelboot, angegeben. Bevorzugt eignet sich das Verfahren zum Betreiben eines hier beschriebenen Antriebs für ein Boot. Das heißt, sämtliche für den Antrieb offenbarten Merkmale sind auch für das Verfahren offenbart und umgekehrt.

Entsprechend der oben gestellten Aufgabe wird in einem Verfahrensschritt des Verfahrens ein Antrieb bereitgestellt, wobei der Antrieb einen Elektromotor, einen mit dem Elektromotor verbundenen Propeller und eine Steuervorrichtung umfasst. In einem weiteren Verfahrensschritt wird der Propeller in Wasser eingebracht. Das Wasser weist eine relative Strömungsgeschwindigkeit bezüglich des Antriebs auf. In einem weiteren Verfahrensschritt wird der Elektromotor derart mit der Steuervorrichtung im vierten Quadranten betrieben, dass eine über den Propeller an den Elektromotor übertragene Strömungsenergie des Wassers in elektrische Energie regeneriert wird und dass ein Produkt aus einer Propeller-Steigung des Propellers und einer Drehzahl des Propellers geringer als die relative Strömungsgeschwindigkeit ist.

Gemäß zumindest einer Ausführungsform des Verfahrens wird der Elektromotor im vierten Quadranten betrieben, während sich das Boot durch das Wasser bewegt. Ein derartiger Betrieb eignet sich insbesondere im Fall eines Segelbootes. Hierbei kann das Segelboot unter Verwendung der Segel bewegt werden.

Es ist alternativ oder zusätzlich möglich, dass das Boot einen weiteren Antrieb aufweist, beispielsweise mittels eines Verbrennungsmotors mittels dem das Boot durch das Wasser bewegt wird. Aufgrund der Bewegung des Boots bewegt sich das Wasser mit der relativen Strömungsgeschwindigkeit zu dem Antrieb des Boots. Die sich hieraus ergebende Strömungsenergie kann dann durch den Betrieb im vierten Quadranten teilweise in elektrische Energie umgewandelt werden. Es ist hierbei alternativ oder zusätzlich möglich, dass der Elektromotor im vierten Quadranten betrieben wird, während das Boot an einem festen Ort bezüglich des Grundes liegt, also beispielsweise vor Anker liegt. In diesem Fall ergibt sich die Strömungsenergie hauptsächlich aus der Strömung des Wassers um das Boot. Dies ist besonders vorteilhaft in Gegenden mit hoher Gezeitenströmung oder beim Liegen in einem Fluss.

Gemäß zumindest einer Ausführungsform des Verfahrens ist der Propeller ein Faltpropeller. Vor dem Betreiben des Elektromotors im vierten Quadranten wird der Elektromotor im ersten Quadranten betrieben um den Propeller auszuklappen. Ein, insbesondere kurzzeitiger, Betrieb im ersten Quadranten unterstützt ein Ausklappen des Elektromotors und schafft damit die Voraussetzung für einen Betrieb als Regenerator zur Regeneration von Strömungsenergie.

Bevorzugt wird der Elektromotor im ersten Quadranten mit etwas höherer Drehzahl und im vierten Quadranten mit etwas niedrigere Drehzahl als der Drehzahl, bei der das Produkt aus Drehzahl und Steigung der relativen Strömungsgeschwindigkeit entspricht, betrieben.

Gemäß zumindest einer Ausführungsform des Verfahrens beinhaltet der Antrieb eine Regelvorrichtung und einen Leistungssensor zur Ermittlung der von dem Elektromotor abgegebenen Leistung. Die Regelvorrichtung bildet mit dem Leistungssensor einen geschlossenen Regelkreis zur Regelung der Drehzahl des Propellers. Die Drehzahl des Propellers wird dann mittels einer Maximal-Leistungspunkt-Suche unter Verwendung des geschlossenen Regelungskreises eingestellt.

Es wird weiterhin ein Antrieb für ein Boot, insbesondere für ein Segelboot, vorgeschlagen, umfassend einen Elektromotor und einen mit dem Elektromotor verbundenen Propeller, dessen Rotationsachse bezüglich einer senkrecht zur Propellerwelle stehenden Hochachse des Elektromotors verschwenkbar ist, und eine Steuervorrichtung aufweist. Erfindungsgemäß ist die Steuervorrichtung dazu eingerichtet, die Rotationsachse des Propellers gegenüber dem Vorwärtsschubbetrieb um 180° bezüglich der Hochachse zu schwenken und den Elektromotor im zweiten Quadranten derart zu betreiben, dass dieser eine über den Propeller an den Elektromotor übertragene Strömungsenergie in elektrische Energie regeneriert.

Eine Anordnung eines Propellers, dessen Rotationsachse bezüglich der Hochachse verschwenkbar ist, kann beispielsweise durch die Aufnahme des Elektromotors und des Propellers in einer um die Hochachse verschwenkbaren Gondel unter dem Boot, oder durch einen verschwenkbaren Saildrive oder Z-Drive erreicht werden.

Durch das Umkehren der Rotationsachse des Propellers steht dieser quasi in einer Ausrichtung entgegengesetzt der Fahrtrichtung des Boots. Damit kann der Propeller durch das anströmende Wasser in Rotation versetzt werden, wobei der Propeller sich dann rückwärts dreht, also in einer Drehrichtung, die einem Rückwärtsschub entspricht. Durch den Betrieb des Elektromotors im zweiten Quadranten kann dann eine Regeneration der Strömungsenergie in elektrische Energie erfolgen.

Sollte hier ein Faltpropeller verwendet werden, wirkt das anströmende Wasser in Aufklapprichtung des Propellers, so dass auf einen kurzfristigen Betrieb im dritten Quadranten verzichtet werden kann.

Die weiteren, sich auf die Steuerung und Regelung des Elektromotors beziehenden Ausführungen, die oben bezüglich des Betriebs im vierten Quadranten beschrieben sind, gelten analog für den Betrieb im zweiten Quadranten.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Darstellung eines ersten Ausführungsbeispiels eines hier beschriebenen Antriebs; und
- Figur 2: eine schematische Darstellung eines zweiten Ausführungsbeispiels eines hier beschriebenen Antriebs.

### Detaillierte Beschreibung bevorzugter Ausführungsbeispiele

Im Folgenden werden bevorzugte Ausführungsbeispiele anhand der Figuren beschrieben. Dabei sind gleiche, ähnliche, gleichartige oder gleichwirkende Elemente in den unterschiedlichen Figuren mit identischen Bezugszeichen versehen. Auf eine wiederholte Beschreibung dieser Elemente wird teilweise verzichtet, um Redundanzen zu vermeiden. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

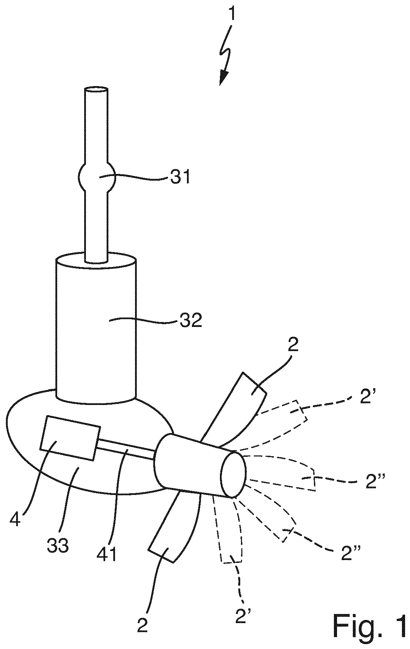

Anhand der schematischen Skizze der Figur 1 ist ein erstes Ausführungsbeispiel eines hier beschriebenen Antriebs 1 näher erläutert. Der Antrieb 1 umfasst einen Elektromotor 4 und einen Propeller 2, der mittels einer Antriebswelle 41 mit dem Elektromotor 4 verbunden ist. Mittels der Antriebswelle 41 kann eine Drehbewegung des Elektromotors 4, insbesondere dessen Drehzahl, auf den Propeller 2 übertragen werden. Der Antrieb 1 umfasst zudem ein erstes Gehäuse 31, ein zweites Gehäuse 32 und ein drittes Gehäuse 33. Das erste Gehäuse 31 dient beispielsweise der Befestigung des Antriebs 1 an einem Rumpf eines Boots. Das dritte Gehäuse 33 beinhaltet den Elektromotor 4. Die Gehäuse 31, 32, 33 können wasserfest ausgebildet sein. Das heißt, in den Gehäusen 31, 32, 33 befindliche Vorrichtungen, wie beispielsweise der Elektromotor 4, können durch das jeweilige Gehäuse 31, 32, 33 vor dem das Boot umgebende Wasser geschützt sein.

Der Antrieb 1 umfasst ferner eine Steuervorrichtung (in den Figuren nicht gezeigt), die mit dem Elektromotor 4 verbunden ist. Die Steuervorrichtung ist dazu eingerichtet, die Drehzahl des Elektromotors 4 und damit auch des Propellers 2 zu steuern. Die Steuervorrichtung kann in eines der Gehäuse 31, 32, 33 eingebracht sein. Alternativ kann die Steuervorrichtung an Bord des Bootes angebracht sein.

Bei dem in der Figur 1 gezeigten Ausführungsbeispiel handelt es sich um einen Pod-Antrieb 1 mit einem Faltpropeller 2. Der Propeller 2 kann dazu eingerichtet sein, eingeklappt zu werden. In der eingeklappten Position 2', 2" weist der Propeller 2 einen geringeren Strömungswiderstand als im ausgeklappten Zustand auf.

Der Antrieb 1 kann ferner Sensoren aufweisen (in den Figuren nicht gezeigt). Mittels der Sensoren kann beispielsweise eine relative Strömungsgeschwindigkeit des Antriebs 1, und insbesondere des Propellers 2, in Bezug zu dem den Antrieb 1 umgebenden Wasser ermittelt werden. Alternativ oder zusätzlich kann ein Leistungssensor mit dem Elektromotor 4 des Antriebs 1 verbunden sein und die von dem Elektromotor 4 abgegebene Leistung ermitteln. Die Drehzahl des Elektromotors 4 - und damit auch des Propellers 2 - kann dann unter Verwendung einer Maximal-Leistungspunkt-Suche ermittelt werden.

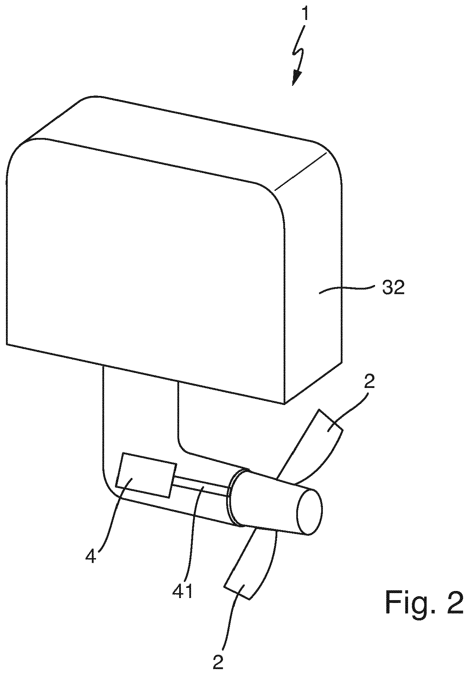

Anhand der schematischen Skizze der Figur 2 ist ein zweites Ausführungsbeispiel eines hier beschriebenen Antriebs 1 näher erläutert. Der Antrieb 1 umfasst erneut einen Elektromotor 4 und einen Propeller 2. Ein zweites Gehäuse 32 des Antriebs 1 kann zur Befestigung an einem Rumpf eines Bootes vorgesehen sein.

Entgegen der Darstellung in den Figuren kann der Propeller 2 auch mehr als zwei Propellerblätter enthalten. Beispielsweise kann der Propeller 2 drei oder mehr Propellerblätter enthalten.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, was insbesondere jede Kombination von Merkmalen in den Patentansprüchen beinhaltet, auch wenn dieses Merkmal oder diese Kombination selbst nicht explizit in den Patentansprüchen oder Ausführungsbeispielen angegeben ist.

### Bezuqszeichenliste

- 1: Antrieb
- 2: Propeller
- 2',2": eingeklappter Propeller
- 31: erstes Gehäuse
- 32: zweites Gehäuse
- 33: drittes Gehäuse
- 4: Elektromotor
- 41: Antriebswelle

## Patentansprüche

1. Antrieb (1) für ein Boot, insbesondere für ein Segelboot, umfassend einen Elektromotor (4), einen mit dem Elektromotor (4) verbundenen Propeller (2) und eine Steuervorrichtung, wobei die Steuervorrichtung dazu eingerichtet ist, den Elektromotor (4) im vierten Quadranten derart zu betreiben, dass dieser eine über den Propeller (2) an den Elektromotor (4) übertragene Strömungsenergie in elektrische Energie regeneriert.
**dadurch gekennzeichnet, dass**
ein Sensor zur Ermittlung der relativen Strömungsgeschwindigkeit zwischen dem Antrieb und dem Wasser mit der Steuervorrichtung verbunden ist und/oder ein GPS-Sensor zur Ermittlung der Geschwindigkeit des Antriebs über Grund mit der Steuervorrichtung verbunden ist,
wobei die Steuervorrichtung dazu eingerichtet ist, unter Ausbildung eines offenen Regelkreises die Drehzahl des Propellers (2) in Abhängigkeit von der ermittelten relativen Strömungsgeschwindigkeit und/oder der Geschwindigkeit über Grund zu regeln, und
ein Leistungssensor zur Ermittlung der von dem Elektromotor (4) abgegebenen Leistung vorgesehen ist und eine Regelvorrichtung mit dem Leistungssensor einen geschlossenen Regelkreis zur Regelung der Drehzahl des Propellers (2) bildet, wobei
der Antrieb (1) ferner dazu eingerichtet ist, für die Einstellung eines optimalen Arbeitspunktes des Elektromotors (4) des Antriebs den offenen Regelkreis mit dem geschlossenen Regelkreis zu kombinieren.

2. Antrieb (1) gemäß Anspruch 1, **dadurch gekennzeichnet, dass** die Steuervorrichtung dazu eingerichtet ist, den Elektromotor (4) so zu betreiben, dass ein Produkt aus einer Propeller-Steigung des Propellers (2) und einer Drehzahl des Propellers (2) geringer als eine relative Strömungsgeschwindigkeit zwischen dem Wasser und dem Antrieb ist.

3. Antrieb nach Anspruch 1 oder 2, **dadurch gekennzeichnet, dass** der Propeller (2) als Faltpropeller ausgebildet ist und die Steuervorrichtung dazu eingerichtet ist, den Elektromotor (4) vor dem Betrieb im vierten Quadranten im ersten Quadranten zu betreiben, um den Propeller (2) auszuklappen, und besonders bevorzugt eine vorgegebene Mindestdrehzahl des Propellers (2) aufrecht zu erhalten.

4. Antrieb (1) gemäß einem der vorstehenden Ansprüche, **dadurch gekennzeichnet, dass** der Antrieb ferner dazu eingerichtet ist , zunächst eine Vorsteuerung mittels des offenen Regelkreises für eine grobe Einstellung des Arbeitspunktes auszuführen und dann eine Feinoptimierung mittels des geschlossenen Regelkreises auszuführen.

5. Antrieb (1) gemäß einem der Ansprüche 2 bis 4, **dadurch gekennzeichnet, dass** die Steuervorrichtung dazu eingerichtet ist, die Drehzahl des Propellers in Abhängigkeit von der relativen Strömungsgeschwindigkeit und der Propeller-Steigung zu regeln.

6. Antrieb (1) gemäß einem der Ansprüche 2 bis 5, **dadurch gekennzeichnet, dass** die Steuervorrichtung ferner dazu eingerichtet ist, den Elektromotor derart zu betreiben, dass ein Produkts der Drehzahl und der Propeller-Steigung zu der relativen Strömungsgeschwindigkeit in einem konstanten Verhältnis steht.

7. Verfahren zum Betreiben eines Antriebs (1) für ein Boot, insbesondere für ein Segelboot, aufweisend die folgenden Schritte:
- Bereitstellen des Antriebs (1) umfassend einen Elektromotor (4), einen mit dem Elektromotor verbundenen Propeller (2) und eine Steuervorrichtung,
- Einbringen des Propellers (2) in Wasser, wobei das Wasser eine relative Strömungsgeschwindigkeit bezüglich des Antriebs (1) aufweist,
- Betreiben des Elektromotors (4) im vierten Quadranten mit der Steuervorrichtung derart, dass eine über den Propeller (2) an den Elektromotor übertragene Strömungsenergie des Wassers in elektrische Energie regeneriert wird
**dadurch gekennzeichnet, dass**
- Ermitteln einer relativen Strömungsgeschwindigkeit zwischen dem Antrieb und dem Wasser und/oder Ermitteln einer Geschwindigkeit des Antriebs über Grund,
- Regeln der Drehzahl des Propellers (2) in Abhängigkeit von der ermittelten relativen Strömungsgeschwindigkeit und/oder der Geschwindigkeit über Grund unter Ausbildung eines offenen Regelkreises,
- Ermittlung der von dem Elektromotor (4) abgegebenen Leistung und Ausbilden eines geschlossenen Regelkreises zur Regelung der Drehzahl des Propellers (2), und
- Kombinieren des offenen Regelkreises mit dem geschlossenen Regelkreis für die Einstellung eines optimalen Arbeitspunktes des Elektromotors des Antriebs.

8. Verfahren gemäß Anspruch 7, wobei die Steuervorrichtung die Drehzahl des Propellers (2) so steuert oder regelt, dass ein Produkt aus der Steigung des Propellers (2) und der Drehzahl des Propellers (2) geringer als die relative Strömungsgeschwindigkeit ist.

9. Verfahren gemäß Anspruch 7 oder 8, wobei der Propeller (2) ein Faltpropeller ist und vor dem Betreiben des Elektromotors (4) im vierten Quadranten der Elektromotor (4) im ersten Quadranten betrieben wird, um den Propeller (2) auszuklappen und besonders bevorzugt eine vorgegebene Mindestdrehzahl des Propellers (2) aufrechterhalten wird.

10. Verfahren nach einem der Ansprüche 7 bis 9, wobei der Antrieb einen Leistungssensor zur Ermittlung der von dem Elektromotor (4) abgegebenen Leistung umfasst und eine Regelvorrichtung mit dem Leistungssensor einen geschlossenen Regelkreis zur Regelung der Drehzahl des Propellers (2) bildet, wobei die Drehzahl des Propellers (2) mittels einer Maximal-Leistungspunkt-Suche unter Verwendung des geschlossenen Regelungskreises eingestellt wird.

## Claims

1. Drive (1) for a boat, in particular for a sailboat, comprising an electric motor (4), a propeller (2) connected to the electric motor (4) and a control device, wherein the control device is configured to operate the electric motor (4) in the fourth quadrant in such a way that the electric motor regenerates a flow energy transmitted via the propeller (2) to the electric motor (4) into electrical power,
**characterised in that**
a sensor for determining the relative flow speed between the drive and the water is connected to the control device and/or a GPS sensor for determining the ground speed of the drive is connected to the control device,
wherein the control device is configured to regulate the rotational speed of the propeller (2) depending upon the determined relative flow speed and/or the ground speed, forming an open regulating loop, and
a power sensor for determining the power output by the electric motor (4) is provided, and a regulating device forms, along with the power sensor, a closed regulating loop for regulating the rotational speed of the propeller (2), wherein
the drive (1) is further configured to combine the open regulating loop with the closed regulating loop in order to set an optimal working point of the electric motor (4) of the drive.

2. Drive (1) according to claim 1, **characterised in that** the control device is configured to operate the electric motor (4) in such a way that a product of a propeller pitch of the propeller (2) and a rotational speed of the propeller (2) is smaller than a relative flow speed between the water and the drive.

3. Drive according to claim 1 or 2, **characterised in that** the propeller (2) is designed as a folding propeller, and the control device is configured to operate the electric motor (4) in the first quadrant before the operation in the fourth quadrant, so as to fold out the propeller (2) and, most preferably, to maintain a predetermined minimum rotational speed of the propeller (2).

4. Drive (1) according to any of the preceding claims, **characterised in that** the drive is further configured to initially perform a pre-control using the open regulating loop in order to roughly set the working point and to then perform a fine-tuning using the closed regulating loop.

5. Drive (1) according to any of claims 2 to 4, **characterised in that** the control device is configured to regulate the rotational speed of the propeller depending upon the relative flow speed and the propeller pitch.

6. Drive (1) according to any of claims 2 to 5, **characterised in that** the control device is further configured to operate the electric motor in such a way that a product of the rotational speed and the propeller pitch is in a constant relationship with the relative flow speed.

7. Method for operating a drive (1) for a boat, in particular for a sailboat, having the following steps:
- providing the drive (1) comprising an electric motor (4), a propeller (2) connected to the electric motor and a control device,
- introducing the propeller (2) into water, the water having a relative flow speed with respect to the drive (1),
- operating the electric motor (4) in the fourth quadrant with the control device in such a way that a flow energy of the water transmitted via the propeller (2) to the electric motor is regenerated into electrical power,
**characterised in that**
- determining a relative flow speed between the drive and the water and/or determining a ground speed of the drive,
- regulating the rotational speed of the propeller (2) depending upon the determined relative flow speed and/or the ground speed, forming an open regulating loop,
- determining the power output by the electric motor (4) and forming a closed regulating loop for regulating the rotational speed of the propeller (2), and
- combining the open regulating loop with the closed regulating loop in order to set an optimal working point for the electric motor of the drive.

8. Method according to claim 7, wherein the control device controls or regulates the rotational speed of the propeller (2) in such a way that a product of the pitch of the propeller (2) and the rotational speed of the propeller (2) is smaller than the relative flow speed.

9. Method according to claim 7 or 8, wherein the propeller (2) is a folding propeller and the electric motor (4) is operated in the first quadrant before being operated in the fourth quadrant of the electric motor (4), so as to fold out the propeller (2) and, most preferably, a predetermined minimum rotational speed of the propeller (2) is maintained.

10. Method according to any of claims 7 to 9, wherein the drive comprises a power sensor for determining the power output by the electric motor (4), and a regulating device forms, along with the power sensor, a closed regulating loop for regulating the rotational speed of the propeller (2), wherein the rotational speed of the propeller (2) is set via maximum power point tracking using the closed regulating loop.

## Revendications

1. Entraînement (1) pour un bateau, en particulier pour un bateau à voiles, comprenant un moteur électrique (4), une hélice (2) reliée au moteur électrique (4) et un dispositif de commande, dans lequel le dispositif de commande est conçu pour faire fonctionner le moteur électrique (4) dans le quatrième quadrant, de telle sorte que celui-ci régénère une énergie de courant transmise au moteur électrique (4) par l'intermédiaire de l'hélice (2) en énergie électrique,
**caractérisé en ce que**
un capteur destiné à déterminer la vitesse de courant relative entre l'entraînement et l'eau est relié au dispositif de commande et/ou un capteur GPS destiné à déterminer la vitesse de l'entraînement par rapport au sol est relié au dispositif de commande,
dans lequel le dispositif de commande est conçu pour réguler la vitesse de rotation de l'hélice (2) en fonction de la vitesse de courant relative déterminée et/ou de la vitesse par rapport au sol en formant une boucle ouverte, et
un capteur de puissance est destiné à déterminer la puissance délivrée par le moteur électrique (4) et un dispositif de régulation forme avec le capteur de puissance une boucle fermée destiné à réguler la vitesse de rotation de l'hélice (2), dans lequel
l'entraînement (1) est en outre conçu, pour le réglage d'un point de fonctionnement optimal du moteur électrique (4) de l'entraînement, pour combiner la boucle ouverte avec la boucle fermée.

2. Entraînement (1) selon la revendication 1, **caractérisé en ce que** le dispositif de commande est conçu pour faire fonctionner le moteur électrique (4) de sorte qu'un produit d'un pas d'hélice de l'hélice (2) et d'une vitesse de rotation de l'hélice (2) est inférieur à une vitesse de courant relative entre l'eau et l'entraînement.

3. Entraînement selon la revendication 1 ou 2, **caractérisé en ce que** l'hélice (2) est réalisée sous la forme d'une hélice repliable et le dispositif de commande est conçu pour faire fonctionner le moteur électrique (4) dans le premier quadrant avant le fonctionnement dans le quatrième quadrant, afin de déplier l'hélice (2), et le plus préférentiellement de maintenir une vitesse de rotation minimale prédéfinie de l'hélice (2).

4. Entraînement (1) selon l'une quelconque des revendications précédentes, **caractérisé en ce que** l'entraînement est conçu en outre pour effectuer tout d'abord une commande pilote au moyen de la boucle ouverte pour un réglage grossier du point de fonctionnement et pour effectuer ensuite une optimisation précise au moyen de la boucle fermée.

5. Entraînement (1) selon l'une quelconque des revendications 2 à 4, **caractérisé en ce que** le dispositif de commande est conçu pour réguler la vitesse de rotation de l'hélice en fonction de la vitesse de courant relative et du pas d'hélice.

6. Entraînement (1) selon l'une quelconque des revendications 2 à 5, **caractérisé en ce que** le dispositif de commande est conçu en outre pour faire fonctionner le moteur électrique de telle sorte qu'un produit de la vitesse de rotation et du pas d'hélice est dans un rapport constant par rapport à la vitesse de courant relative.

7. Procédé de fonctionnement d'un entraînement (1) pour un bateau, en particulier pour un bateau à voiles, présentant les étapes suivantes :
- la fourniture de l'entraînement (1) comprenant un moteur électrique (4), une hélice (2) reliée au moteur électrique et un dispositif de commande,
- l'introduction de l'hélice (2) dans l'eau, dans lequel l'eau présente une vitesse de courant relative par rapport à l'entraînement (1),
- le fonctionnement du moteur électrique (4) dans le quatrième quadrant avec le dispositif de commande, de telle sorte qu'une énergie de courant de l'eau transmise au moteur électrique par l'intermédiaire de l'hélice (2) est régénérée en énergie électrique
**caractérisé en ce que**
- la détermination d'une vitesse de courant relative entre l'entraînement et l'eau et/ou la détermination d'une vitesse de l'entraînement par rapport au sol,
- la régulation de la vitesse de rotation de l'hélice (2) en fonction de la vitesse de courant relative déterminée et/ou de la vitesse par rapport au sol en for,qnt une boucle ouverte,
- la détermination de la puissance délivrée par le moteur électrique (4) et la formation d'une boucle ferméedestiné à réguler la vitesse de rotation de l'hélice (2), et
- la combinaison de la boucle ouverte avec la boucle fermée pour le réglage d'un point de fonctionnement optimal du moteur électrique de l'entraînement.

8. Procédé selon la revendication 7, dans lequel le dispositif de commande commande ou régule la vitesse de rotation de l'hélice (2), de sorte qu'un produit du pas de l'hélice (2) et de la vitesse de rotation de l'hélice (2) est inférieur à la vitesse de courant relative.

9. Procédé selon les revendications 7 ou 8, dans lequel l'hélice (2) est une hélice repliable et, avant le fonctionnement du moteur électrique (4) dans le quatrième quadrant, le moteur électrique (4) fonctionne dans le premier quadrant, afin de déplier l'hélice (2) et le plus préférentiellement une vitesse de rotation minimale prédéfinie de l'hélice (2) est maintenue.

10. Procédé selon l'une quelconque des revendications 7 à 9, dans lequel l'entraînement comprend un capteur de puissance destiné à déterminer la puissance délivrée par le moteur électrique (4) et un dispositif de régulation forme avec le capteur de puissance une boucle fermée destiné à réguler la vitesse de rotation de l'hélice (2), dans lequel la vitesse de rotation de l'hélice (2) est réglée au moyen d'une recherche de point de puissance maximale au moyen de la boucle fermée.
